# EUROPÄISCHE PATENTSCHRIFT

(11) **EP 3 673 156 B1**
(45) Veröffentlichungstag und Bekanntmachung des Hinweises auf die Patenterteilung: **04.01.2023**
(21) Anmeldenummer: 18740805.9
(22) Anmeldetag: 12.07.2018
(51) Int. Cl.: F01L 13/00, F01L 1/047, F01M 9/10

(54) **VENTILTRIEB FÜR EINE BRENNKRAFTMASCHINE**
VALVE DRIVE IN AN INTERNAL COMBUSTION ENGINE
COMMANDE DE SOUPAPE DE MOTEUR À COMBUSTION INTERNE

(30) Priorität: 24.08.2017 DE 102017214794
(43) Veröffentlichungstag der Anmeldung: 01.07.2020
(73) Patentinhaber: Bayerische Motoren Werke Aktiengesellschaft, 80809 München (DE)
(72) Erfinder: EMMERSBERGER, Georg, 83539 Pfaffing (DE); KNOLL, Dietmar, 85622 Feldkirchen (DE); KRAFT, Roland, 85716 Unterschleissheim (DE); SCHMID, Rudolf, 85521 Riemerling (DE); STEINLE, Thomas, 80797 München (DE)
(86) Internationale Anmeldenummer: PCT/EP2018/068926
(87) Internationale Veröffentlichungsnummer: WO 2019/037943

(56) Entgegenhaltungen:
- DE-A1-102013 111 410
- US-A1- 2016 123 198

## Beschreibung

Die Erfindung betrifft einen Ventiltrieb für einen Zylinderkopf einer Brennkraftmaschine mit den Merkmalen aus dem Oberbegriff des Patentanspruchs 1.

Zum technischen Umfeld wird beispielsweise auf die deutsche Offenlegungsschrift DE 10 2014 220 385 A1 hingewiesen. Aus dieser ist ein schaltbarer Ventiltrieb einer Hubkolbenbrennkraftmaschine bekannt, mit zumindest einem hebelartig ausgebildeten, schwenkbar auf einer Hebelachse angeordneten Nockenfolger, der in Achsrichtung der Hebelachse verlagerbar ist. Die Hebelachse ist parallel zu einer Nockenwelle verlaufend in einem Nockenwellenlagergehäuse angeordnet. Der mit einem Ende des Ventilschaftes eines Gaswechselventils zusammenwirkende Nockenfolger ist zumindest mittelbar mit unterschiedlichen Nockenprofilen zumindest zweier Nocken, die Bestandteil zumindest einer Nockengruppe sind, in Kontakt bringbar. Der zumindest eine Nockenfolger ist in axialer Richtung in der Hebelachse fixiert, dass die Hebelachse im Nockenwellenlagergehäuse in Längsrichtung verschiebbar angeordnet ist und dass zumindest ein an der Hebelachse vorgesehener Mitnehmer an zumindest einer an der Nockenwelle vorgesehenen Steuerkontur in Eingriff bringbar ist, die schräg- oder kurvenartig zu einer Querebene der Nockenwelle verläuft. Da die beiden Schwinghebel zur Hebelachse eine durch die Nocken oder der Nockengruppe bewirkte Schwenkbewegung ausführen müssen, sind an diesen Schmierölbohrungen zur Zusammenführung des Motoröls an die entsprechende Gleitlagerung der Schwinghebel vorgesehen.

Nachteilig an dieser bekannten Ausgestaltung ist die sehr aufwendige bauliche Anordnung, um einen Nockenfolger schiebebeweglich darzustellen.

Weiter ist aus der Deutschen Patentschrift DE 196 11 641 C1 ein Ventiltrieb für eine Brennkraftmaschine bekannt mit einer Nockenwelle mit Nocken zur Betätigung von Gaswechselventilen, von denen mindestens ein Nocken mit mehreren axial hintereinander angeordneten Nockenbahnen versehen ist und drehfest aber axial verschieblich auf der Nockenwellen geführt ist und mit einem in Richtung der Nockenwellenachse wirkenden Hubprofil, das mit mindestens einem Betätigungselement zum axialen Verschieben des Nockens zusammenwirkt. Das Hubprofil ist am Nocken ausgebildet und das Betätigungselement weist einen radial zur Nockenwelle angeordneten Betätigungsstift auf, der radial verschieblich in oder aus einem Eingriff mit dem Hubprofil zu bringen ist.

Dieser Ventiltrieb einer Brennkraftmaschine ermöglicht die Betätigung eines Gaswechselventils mit zumindest zwei unterschiedlichen Hubkurven. Dazu ist auf der Nockenwelle ein Nocken mit mehreren Nockenbahnen drehfest aber axial verschieblich gelagert. Dieser Nocken weist eine Hubkontur auf, in die das Betätigungsmittel eingreift und somit eine axiale Verschiebung des Nockens erzeugt, wobei ein Umschalten von einer zu einer anderen Nockenbahn in axialer Richtung erfolgt.

Nachteilig an diesem bekannten System ist, dass ein Rollenschlepphebel zur Betätigung der Gaswechselventile verwendet wird. Dieser Rollenschlepphebel ist jedoch relativ teuer und bei höchsten Drehzahlen, wie beispielsweise einem Motorradmotor, könnte die Wälzlagerung problematisch sein.

Um diesen Nachteil zu beseitigen wird in der Deutschen Offenlegungsschrift DE 10 2016 200 325 A1, von der die vorliegende Erfindung ausgeht, ein Ventiltrieb für eine Brennkraftmaschine vorgeschlagen, mit einer in axialer Richtung einen Hohlraum aufweisenden Nockenwelle mit einem Nockenkörper zur Betätigung von zumindest einem Gaswechselventil, wobei der Nockenkörper zumindest eine erste und eine zweite, axial nebeneinander liegende Nockenbahn mit unterschiedlichen Gaswechselventilhubbahnen aufweist und drehfest und axial verschieblich radial um die Nockenwelle angeordnet ist, wobei eine Hubverstellung des Gaswechselventils mittelbar über einen Gleitschlepphebel erfolgt. Dieser Gleitschlepphebel ist bei höchsten Drehzahlen der Brennkraftmaschine deutlich robuster als ein Rollenschlepphebel. Hierbei ist die Nockenwelle in einem Nockenwellenlager drehbar gelagert und der Hohlraum über eine Schmiermittelöffnung in dem Nockenwellenlager und einem ersten Durchbruch in der Nockenwelle und einem zweiten Durchbruch in dem Nockenkörper mit einem Schmiermittel befüllbar, wobei in Drehrichtung der Nockenwelle vor einer Nockenerhebung in der Nockenwelle ein dritter Durchbruch und in dem Nockenkörper ein vierter Durchbruch angeordnet ist, zum Austritt des Schmiermittels aus dem Hohlraum, zur intermittierenden Schmierung des Gleitschlepphebels.

Die intermittierende Schmierung dient der volumenstromsparenden, gezielten Ölung von Ventilbetätigungsmitteln. Hierbei wird nur während einer Ventilbetätigung geölt, dann nicht mehr. Bei Schiebenockensystemen ist die sichere Ölversorgung nicht sichergestellt. Weiter sind bei Verschiebenockensystemen aufwendige mechanische Bearbeitungen und die Einhaltung höchster Toleranzen notwendig, um beim Betrieb der Brennkraftmaschine störende Geräusche zu vermeiden.

Weiter ist aus der Deutschen Offenlegungsschrift DE 10 2013 111 410 A1, von der die vorliegende Erfindung ausgeht, ein Ventiltrieb für einen Zylinderkopf einer Brennkraftmaschine bekannt, mit einer in einem ersten und einem zweiten Nockenwellenlager drehbar gelagerten Nockenwelle mit zumindest einem Nocken mit einer ersten Nockenkurve und einer zweiten, von der ersten Nockenkurve unterschiedlichen Nockenkurve, wobei mit der ersten oder der zweiten Nockenkurve ein Gaswechselventil über einen Nockenfolger betätigbar ist. Es ist ein Nockenwellenabschnitt vorgesehen mit dem über ein Stellmittel der Nocken derart verschiebbar ist, dass das Gaswechselventil entweder über die erste oder die zweite Nockenkurve über den Nockenfolger betätigbar ist, wobei die Nockenwelle und der Nocken eine feste Lage zueinander haben und die Nockenwelle in dem ersten und dem zweiten Nockenwellenlager axial verschiebbar ist. Die Nockenwellenlager bestehen aus je einem Nockenwellenlagerstuhl und einem gemeinsamen Lagerrahmen und es ist eine Schmiermittelzuführbohrung vorgesehen, die in eine vierte Schmiermittelnut in dem Lagerrahmen mündet zur Versorgung der Lagerstellen mit Schmiermittel. In dem ersten Nockenwellenlagerstuhl ist eine erste Schmiermittelnut und in dem zweiten Nockenwellenlagerstuhl ist eine zweite Schmiermittelnut vorgesehen, die zu der vierten Schmiermittelnut korrespondierend sind, die in Richtung Nockenfolger offen sind.

Nachteilig ist die nicht optimale Schmierung der Nockenfolger.

Aufgabe der vorliegenden Erfindung ist es, eine Maßnahme aufzuzeigen, die Nockenfolgerschmierung zu verbessern.

Diese Aufgabe wird erfindungsgemäß durch die Merkmale im kennzeichnenden Teil des Patentanspruchs 1 gelöst.

Vorteilhafte Weiterbildungen der Erfindung sind in den Unteransprüchen beschrieben.

Durch die erfindungsgemäße Ausgestaltung des Ventiltriebs ist eine Schmierung eines Nockenfolgers, wie einem Gleitschlepphebel, möglich, für eine komplett axial verschiebbare Nockenwelle. Weiter erlaubt sie die Schmierung des Nockenfolgers, unabhängig davon, in welcher Stellung sich die Nockenwelle befindet.

Die Ausgestaltung gemäß Patentanspruch 2 ermöglicht eine Schmiermittel sparende intermittierende Schmierung des Nockenfolgers.

Besonders bevorzugt ist der Nockenfolger gemäß Patentanspruch 3 ein Gleitschlepphebel.

Im Folgenden ist die Erfindung anhand von vier Figuren näher erläutert.
- Figur 1: zeigt eine Aufsicht auf einen Zylinderkopf ohne Zylinderkopfdeckel.
- Figur 2: zeigt eine Unteransicht auf einen Lagerrahmen.
- Figur 3: zeigt eine dreidimensional dargestellte Nockenwelle.
- Figur 4: zeigt einen Schnitt durch die Nockenwelle.

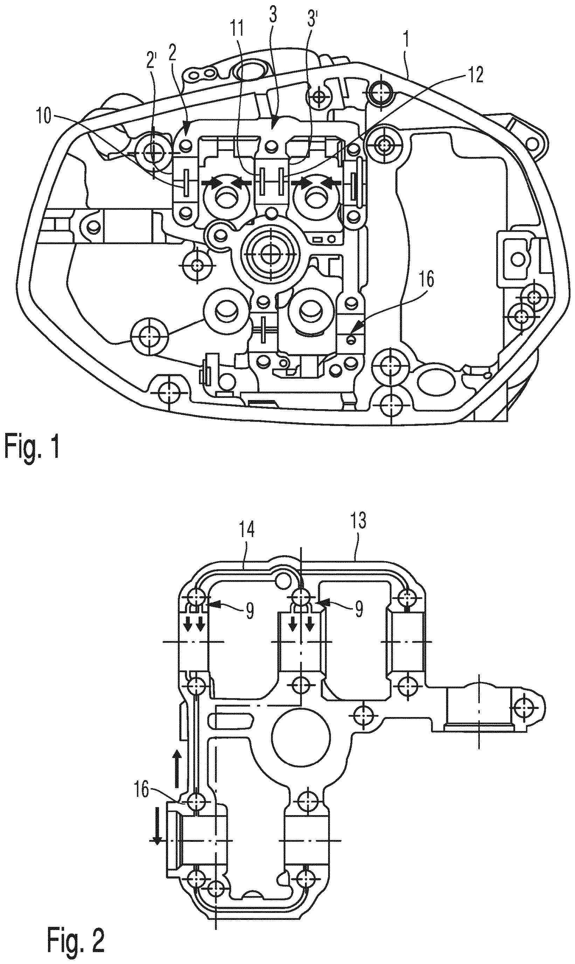

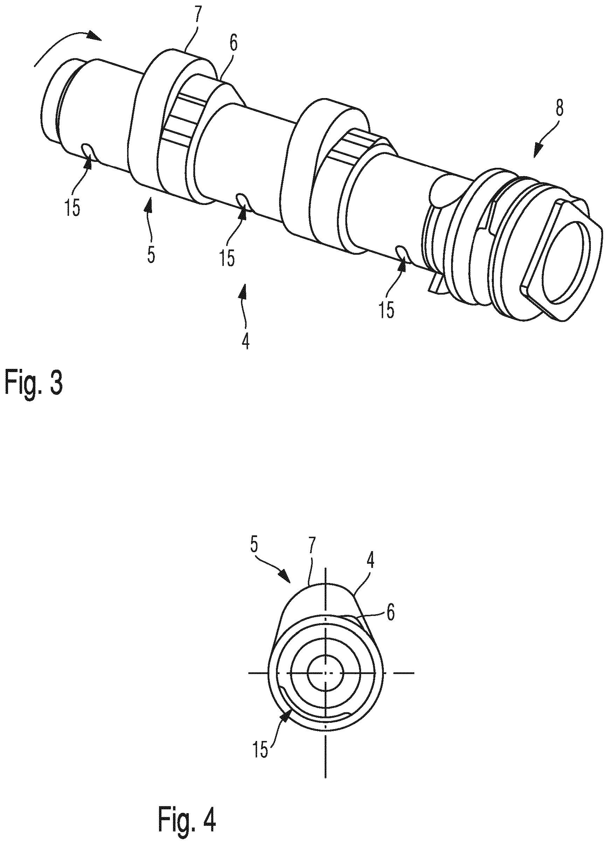

Fig. 1 Zeigt eine Aufsicht auf einen Zylinderkopf 1 einer Brennkraftmaschine ohne Ventildeckel und ohne die Lagerdeckel, wobei die Lagerdeckel von einem, in Fig. 2 dargestellten Lagerrahmen 13 gebildet sind. Der Ventiltrieb weist eine in einem ersten Nockenwellenlager 2 und in einem zweiten Nockenwellenlager 3 drehbar gelagerte, in Figur 4 dargestellte, Nockenwelle 4 mit zumindest einem Nocken 5 mit einer ersten Nockenkurve 6 und einer zweiten, von der ersten Nockenkurve 6 unterschiedlichen Nockenkurve 7 auf. Hierbei ist mit der ersten oder der zweiten Nockenkurve 6, 7 ein nicht dargestelltes Gaswechselventil über einen nicht dargestellten Nockenfolger betätigbar ist. Die Nockenwelle 4 ist in dem vorliegenden Ausführungsbeispiel für zwei Gaswechselventile vorgesehen, für einen einzigen Zylinder der Brennkraftmaschine. Weiter ist ein in Figur 4 dargestellter Nockenwellenabschnitt 8 vorgesehen, mit dem über ein nicht dargestelltes Stellmittel der Nocken 5 mit einem Stift derart verschiebbar ist, dass das Gaswechselventil entweder über die erste oder die zweite Nockenkurve 6, 7 über den Nockenfolger betätigbar ist.

Erfindungsgemäß haben die Nockenwelle 4 und der Nocken 5 eine feste Lage zueinander und die Nockenwelle 4 ist in dem ersten und dem zweiten Nockenwellenlager 2, 3 axial verschiebbar ist. Weiter bestehen die Nockenwellenlager 2, 3 aus je einem Nockenwellenlagerstuhl 2', 3' und einem gemeinsamen, in Fig. 2 dargestellten Lagerrahmen 13, wobei in dem Zylinderkopf 1 eine Schmiermittelzuführbohrung 16 vorgesehen ist, die in eine vierte Schmiermittelnut 14 in dem Lagerrahmen 13 mündet zur Versorgung der Lagerstellen mit Schmiermittel, wobei in dem ersten Nockenwellenlagerstuhl 2' eine erste Schmiermittelnut 10 und in dem zweiten Nockenwellenlagerstuhl 3' eine zweite Schmiermittelnut 11 vorgesehen ist, die zu der vierten Schmiermittelnut 14 korrespondierend sind und die in Richtung Nockenfolger offen sind zur Zuführung von Schmiermittel zu den Nockenfolgern. Weiter ist eine dritte, zur zweiten Schmiermittelnut 11 parallel angeordnete Schmiermittelnut 12 in dem zweiten Lagerstuhl 3' vorgesehen, die ebenfalls zu dem Nockenfolger offen ist, zur Schmierung des Nockenfolgers. Der Abstand der zweiten Schmiermittelnut 11 und der dritten Schmiermittelnut 12 entspricht einem Verschiebeweg der Nockenwelle 4 von der ersten Nockenkurve 6 zur zweiten Nockenkurve 7. Über eine Schmiermittelzuführbohrung 16 im Zylinderkopf wird die vierte Schmiermittelnut 14 in dem Lagerrahmen 13 mit Schmiermittel versorgt und zu den Lagerstellen gefördert. Zur Schmierung der Nockenfolger tritt aus den ersten Nockenwellenlagerstuhl 2' und dem zweiten Nockenwellenlagerstuhl 3' Schmiermittel aus. Ein Austreten des Schmiermittels ist jeweils durch einen Pfeil dargestellt.

Figur 2 zeigt den zugehörigen Lagerrahmen 13 zur Komplettierung des ersten Nockenwellenlagers 2 und des zweiten Nockenwellenlagers 3. Wie bereits zu Figur 1 erläutert, erfolgt die Schmiermittelzuführung durch die Schmiermittelzuführbohrung 16, und wird einerseits auslassseitig und andererseits einlassseitig weitergeleitet, was ebenfalls durch Pfeile symbolisch dargestellt ist. In dem Lagerrahmen 13 wird das Schmiermittel in der vierten Schmiermittelnut 14 zu den Lagerstellen weiter geleitet, wobei die vierte Schmiermittelnut 14 vor zumindest einer Lagerstelle 2, 3 eine Gabelung 9 aufweist, so dass die vierte Schmiermittelnut 14 sowohl zur zweiten Schmiermittelnut 11 und zur dritten Schmiermittelnut 12 korrespondierend ist. Im vorliegenden Ausführungsbeispiel liegt die Gabelung für beide Nockenwellenlager 2, 3 vor.

Figur 3 zeigt eine Aufsicht auf die dreidimensional dargestellte Schiebenockenwelle 4. Eine Drehrichtung der Nockenwelle ist mit einem Pfeil dargestellt. Die Nockenwelle 4 weist zwei Nocken 5 auf, von denen nur einer beziffert ist. Der Nocken 5 weist die erste Nockenkurve 6 und die zweite Nockenkurve 7 auf, die voneinander unterschiedliche Hubkurven aufweisen. An einem Nockenwellenabschnitt 8 ist die gesamte Nockenwelle 4 von einem nicht dargestellten Stellmittel axial in zwei Stellungen verschiebbar.

Zur Förderung des Schmiermittels zur Schmierung der Nockenfolger ist in der Nockenwelle 4 eine radial zumindest abschnittsweise umlaufende fünfte Schmiermittelnut 15 vorgesehen. Ist die fünfte Schmiermittelnut 15 umlaufend, erfolgt eine ständige Schmierung der Nockenfolger. Ist die fünfte Schmiermittelnut nur abschnittsweise umlaufend, erfolgt eine Schmiermittel sparende, intermittierende Schmierung der Nockenfolger.

Figur 4 zeigt einen Schnitt durch die Nockenwelle 4 mit der fünften Schmiermittelnut 15. In Figur 4 ist auch der Nocken 5 dargestellt, mit der ersten Nockenkurve 6 und der zweiten Nockenkurve 7. Da der Verschiebemechanismus der Nockenwelle 4 aus dem Stand der Technik bereits bekannt ist, wird dieser an dieser Stelle nicht näher erläutert.

Besonders bevorzugt ist der nicht dargestellte Nockenfolger ein Gleitschlepphebel. Der erfindungsgemäße Ventiltrieb kann sowohl einlassseitig als auch auslassseitig in dem Zylinderkopf 1 angeordnet werden.

### Bezugszeichenliste

- 1: Zylinderkopf
- 2: erstes Nockenwellenlager
- 2': erster Nockenwellenlagerstuhl
- 3: zweites Nockenwellenlager
- 3': zweiter Nockenwellenlagerstuhl
- 4: Nockenwelle
- 5.: Nocke
- 6.: erste Nockenkurve
- 7.: zweite Nockenkurve
- 8.: Nockenwellenabschnitt
- 9.: Gabelung
- 10.: erste Schmiermittelnut
- 11.: zweite Schmiermittelnut
- 12.: dritte Schmiermittelnut
- 13.: Lagerrahmen
- 14.: vierte Schmiermittelnut
- 15.: fünfte Schmiermittelnut
- 16.: Schmiermittelzuführbohrung

## Patentansprüche

1. Ventiltrieb für einen Zylinderkopf (1) einer Brennkraftmaschine, mit einer in einem ersten (2) und einem zweiten Nockenwellenlager (3) drehbar gelagerten Nockenwelle (4) mit zumindest einem Nocken (5) mit einer ersten Nockenkurve (6) und einer zweiten, von der ersten Nockenkurve (6) unterschiedlichen Nockenkurve (7), wobei mit der ersten oder der zweiten Nockenkurve (6, 7) ein Gaswechselventil über einen Nockenfolger betätigbar ist, wobei ein Nockenwellenabschnitt (8) vorgesehen ist mit dem über ein Stellmittel der Nocken (5) derart verschiebbar ist, dass das Gaswechselventil entweder über die erste oder die zweite Nockenkurve (6, 7) über den Nockenfolger betätigbar ist, wobei die Nockenwelle (4) und der Nocken (5) eine feste Lage zueinander haben und die Nockenwelle (4) in dem ersten und dem zweiten Nockenwellenlager (2, 3) axial verschiebbar ist, **dadurch gekennzeichnet, dass** die Nockenwellenlager (2, 3) aus je einem Nockenwellenlagerstuhl (2', 3') und einem gemeinsamen Lagerrahmen (13) bestehen und eine Schmiermittelzuführbohrung (16) vorgesehen ist, die in eine vierte Schmiermittelnut (14) in dem Lagerrahmen (13) mündet zur Versorgung der Lagerstellen mit Schmiermittel, wobei in dem ersten Nockenwellenlagerstuhl (2') eine erste Schmiermittelnut (10) und in dem zweiten Nockenwellenlagerstuhl (3') eine zweite Schmiermittelnut (11) vorgesehen ist, die zu der vierten Schmiermittelnut (14) korrespondierend sind, die in Richtung Nockenfolger offen sind und wobei die vierte Schmiermittelnut (14) am Übergang zu einem Nockenwellenlagerstuhl (2', 3') eine Gabelung (9) aufweist und der Nockenwellenlagerstuhl (2', 3') eine korrespondierende dritte Schmiermittelnut (12) aufweist, die von der zweiten Schmiermittelnut (11) um einen Verschiebeweg der Nockenwelle (4) beabstandet ist und die in Richtung Nockenfolger offen ist.

2. Ventiltrieb nach Patentanspruch 1,
**dadurch gekennzeichnet, dass** die Nockenwelle (4) eine zumindest abschnittsweise radial außen umlaufende fünfte Schmiermittelnut (15) aufweist, die je nach Stellung der Nockenwelle (4) zur zweiten oder zur dritten Schmiermittelnut (11, 12) korrespondierend ist.

3. Ventiltrieb nach einem der Patentansprüche 1 oder 2,
**dadurch gekennzeichnet, dass** der Nockenfolger ein Gleitschlepphebel ist.

## Claims

1. Valve drive for a cylinder head (1) of an internal combustion engine, with a camshaft (4) which is mounted rotatably in a first (2) and a second camshaft bearing (3), with at least one cam (5) with a first cam curve (6) and a second cam curve (7) which is different from the first cam curve (6), a gas exchange valve being actuable by way of the first or the second cam curve (6, 7) via a cam follower, a camshaft portion (8) being provided, by way of which the cam (5) can be displaced via an actuating means in such a way that the gas exchange valve is actuable either via the first or the second cam curve (6, 7) via the cam follower, the camshaft (4) and the cam (5) having a fixed position with respect to one another, and the camshaft (4) being axially displaceable in the first and the second camshaft bearing (2, 3), **characterized in that** the camshaft bearings (2, 3) consist of in each case one camshaft bearing pedestal (2', 3') and a common bearing frame (13), and a lubricant feed bore (16) is provided which opens into a fourth lubricant groove (14) in the bearing frame (13) in order to supply the bearing points with lubricant, a first lubricant groove (10) being provided in the first camshaft bearing pedestal (2') and a second lubricant groove (11) being provided in the second camshaft bearing pedestal (3'), which lubricant grooves (10, 11) correspond to the fourth lubricant groove (14) and are open in the direction of the cam follower, and the fourth lubricant groove (14) having a fork (9) at the transition to a camshaft bearing pedestal (2', 3'), and the camshaft bearing pedestal (2', 3') having a corresponding third lubricant groove (12) which is spaced apart from the second lubricant groove (11) by a displacement travel of the camshaft (4) and is open in the direction of the cam follower.

2. Valve drive according to Patent Claim 1, **characterized in that** the camshaft (4) has a fifth lubricant groove (15) which runs around radially on the outside at least in sections and corresponds to the second or to the third lubricant groove (11, 12) depending on the position of the camshaft (4).

3. Valve drive according to either of Patent Claims 1 or 2, **characterized in that** the cam follower is a sliding rocker arm.

## Revendications

1. Mécanisme de commande de soupapes pour une culasse (1) d'un moteur à combustion interne, avec un arbre à cames (4) monté en rotation dans un premier (2) et un deuxième (3) palier d'arbre à cames, avec au moins une came (5) ayant une première courbe de came (6) et une deuxième courbe de came (7) différente de la première courbe de came (6), une soupape d'échange de gaz pouvant être actionnée avec la première ou la deuxième courbe de came (6, 7) par l'intermédiaire d'un suiveur de came, une section d'arbre à cames (8) étant prévue, avec laquelle la came (5) peut être déplacée par l'intermédiaire d'un moyen de réglage de telle sorte que la soupape d'échange de gaz peut être actionnée soit par la première, soit par la deuxième courbe de came (6, 7) par l'intermédiaire du suiveur de came, l'arbre à cames (4) et la came (5) ayant une position fixe l'un par rapport à l'autre et l'arbre à cames (4) pouvant être déplacé axialement dans le premier et le deuxième palier d'arbre à cames (2, 3), **caractérisé en ce que** les paliers d'arbre à cames (2, 3) sont constitués chacun d'un corps de palier d'arbre à cames (2', 3') et d'un cadre de palier commun (13), et un alésage d'amenée de lubrifiant (16) est prévu, qui débouche dans une quatrième rainure de lubrifiant (14) dans le cadre de palier (13) pour alimenter les points d'appui en lubrifiant, une première rainure de lubrifiant (10) étant prévue dans le premier corps de palier d'arbre à cames (2') et une deuxième rainure de lubrifiant (11) étant prévue dans le deuxième corps de palier d'arbre à cames (3'), lesquelles correspondent à la quatrième rainure de lubrifiant (14), qui sont ouvertes en direction du suiveur de came, et la quatrième rainure de lubrifiant (14) présentant une bifurcation (9) à la transition vers un corps de palier d'arbre à cames (2', 3') et le corps de palier d'arbre à cames (2', 3') présentant une troisième rainure de lubrifiant (12) correspondante qui est espacée de la deuxième rainure de lubrifiant (11) d'une distance de déplacement de l'arbre à cames (4) et qui est ouverte en direction du suiveur de came.

2. Mécanisme de commande de soupapes selon la revendication 1, **caractérisé en ce que** l'arbre à cames (4) présente une cinquième rainure de lubrifiant (15) circulant radialement à l'extérieur au moins par sections, qui correspond à la deuxième ou à la troisième rainure de lubrifiant (11, 12) selon la position de l'arbre à cames (4).

3. Mécanisme de commande de soupapes selon l'une quelconque des revendications 1 ou 2, **caractérisé en ce que** le suiveur de came est un levier entraîneur coulissant.
